Europäisches Patentamt

European Patent Office

Office européen des brevets

(19)

(11) Publication number: **0 193 171 B1**

## EUROPEAN PATENT SPECIFICATION

(12)

(45) Date of publication of patent specification: **21.08.91**　(51) Int. Cl.⁵: **C01G 41/00**

(21) Application number: **86102455.2**

(22) Date of filing: **25.02.86**

(54) **Method of producing crystalline ammonium metatungstate.**

(30) Priority: **25.02.85 US 704842**
**25.02.85 US 704992**

(43) Date of publication of application:
**03.09.86 Bulletin 86/36**

(45) Publication of the grant of the patent:
**21.08.91 Bulletin 91/34**

(84) Designated Contracting States:
**AT DE GB**

(56) References cited:
**FR-A- 1 356 164**
**US-A- 3 175 881**
**US-A- 4 504 461**

(73) Proprietor: **GTE Products Corporation**
**100 West 10th Street**
**Wilmington, DE 19801(US)**

(72) Inventor: **Boyer, Carl W.**
**R.D. 1**
**Towanda, PA 18848(US)**
Inventor: **Ennis, Donald H.**
**R.D. 4**
**Towanda, PA 18848(US)**
Inventor: **Kim, Tai K.**
**R.D. 1**
**Towanda, PA 18848(US)**
Inventor: **McInnis, Martin B.**
**5 Foster Road**
**Towanda, PA 18848(US)**

(74) Representative: **Patentanwälte Grünecker,**
**Kinkeldey, Stockmair & Partner**
**Maximilianstrasse 58**
**W-8000 München 22(DE)**

## Description

This invention relates to a method for producing ammonium metatungstate in crystalline form using ammonium paratungstate as the starting material.

Tungsten, generally in the form of tungsten oxide, $WO_3$, is useful as a component of a variety of catalysts for chemical reactions. In most cases in the manufacture of these catalysts it is necessary at some stage to provide a water soluble tungsten compound from which the tungsten oxide is derived. For example, certain types of catalysts comprise porous carriers such as, for example, alumina impregnated with compounds of catalytic elements such as tungsten. In the preparation of such catalysts the carrier materials are immersed, or slurried in solutions of the compounds of the catalytic elements and then dried, leaving the catalyst compound intimately associated with the carrier. Ammonium metatungstate, $(NH_4)_6H_2W_{12}O_{40}.xH_2O$ is a particularly useful solute in such solutions. It offers the advantages of being readily soluble in water and, in addition, it decomposes readily on heating to leave the desired catalytic residue of tungsten oxide in the carrier. Alkali metal salts of the tungstates are also water soluble, but their use in catalyst manufacture is restricted by the fact that the presence of residual alkali metals frequently is objectionable in catalytic materials.

It has been proposed to obtain ammonium metatungstate solutions by baking crystalline ammonium paratungstate at temperatures of the order of 260°C (500°F) to drive off ammonia and to then dissolve the product of the baking operation in water. As is well known, a certain amount of ammonium metatungstate is produced by such a baking operation. However, thermogravimetric studies of this process have demonstrated that the ammonium paratungstate is not converted entirely to ammonium metatungstate at any particular temperature, nor after any particular baking time. To the contrary, other degradation products, particularly insoluble tungsten oxide also are continuously formed during the baking. In addition, certain amounts of unconverted ammonium paratungstate remain. As a result, substantial amounts of insoluble tungsten oxide and also ammonium paratungstate, which is only slightly soluble, remain undissolved when it is attempted to dissolve the product of the baking operation making it necessary to filter the solution before use, and discard or reprocess the insoluble materials. Also, as indicated above, the small amount of paratungstate remaining in solution may complicate the use of the solution because of its tendency to precipitate out with temperature changes or evaporation of the water.

U.S. Patent 3,591,331 discloses a process for producing ammonium metatungstate without an appreciable formation of ammonium paratungstate. The process comprises contacting an aqueous ammonium tungstate solution having a pH of at least about 9 with an organic extractant solution comprising di-2-ethylhexyl phosphoric acid, and a water insoluble hydrocarbon solvent, the components being in specified ratios to extract ammonium ions from the aqueous solution, separating the resultant aqueous solution from the organic solution, heating the aqueous solution to a temperature of at least about 60°C for at least 1 h and recovering an essentially pure ammonium metatungstate.

U.S. Patent 3,857,928 discloses a process for producing crystalline ammonium metatungstate from ammonium tungstate solution by introducing the ammonium tungstate solution into an ion exchange column containing a weak acid (carboxylic group) cation exchange resin, and collecting the effluent from the column until a pH of about 3.5 is reached. The effluent solution is then digested at about 98°C for about 5 h, followed by crystallization of ammonium metatungstate by conventional processes, such as, evaporation or spray drying.

U.S. Patent 3,857,929 discloses a process for producing crystalline ammonium metatungstate from ammonium tungstate solution by introducing a strong acid cation exchange resin containing sulphonic group batchwise into an ammonium tungstate solution until a pH of about 3.5 is reached. The resin is then removed by filtration and the filtered solution is digested at about 98°C for at least about 5 h, followed by crystallization of ammonium metatungstate by conventional processes, such as, evaporation or spray drying.

U.S. Patent 3,956,474 discloses a process for producing ammonium metatungstate from ammonium tungstate which involves the addition of about 3.6 percent by weight of silica to an ammonium tungstate solution, digestion for at least about 4 h at a temperature of at least about 98°C followed by filtration to remove silica from the ammonium metatungstate solution. Typically about 0.4 percent by weight of silica remains after filtering. The resulting ammonium metatungstate solution may be further processed to recover solid ammonium metatungstate, such as by evaporation or spray drying.

U.S. Patent 3,936,362 discloses a process for producing ammonium metatungstate and other species by passing tungstate ions through an anion exchange membrane into an aqueous solution containing ammonium cations under the driving force of an electrical potential for a time sufficient to achieve a pH within the range in which the desired tungsten compound will form.

U.S. Patent 3,175,881 discloses a method for producing crystalline ammonium metatungstate from ammonium paratungstate by heating the ammonium paratungstate to the point at which a slurry containing about 9% by weight of material exhibits a pH of from about 3 to about 5, the heating time being generally from about 4 to about 8 h, followed by evaporation of the slurry to about one-third of its original volume, filtering the concentrated slurry and then crystallizing ammonium metatungstate. Based on the $WO_3$ contents of the ammonium paratungstate starting material and the ammonium metatungstate produced, the yield is about 78.1%.

It is the object of the present invention to provide a method of producing crystalline ammonium metatungstate from ammonium paratungstate in higher yields than in the known processes.

Said object is achieved by a method according to claim 1.

By the method of this invention, crystalline ammonium metatungstate is produced from ammonium paratungstate in high yields.

Commercially available ammonium paratungstate which has the generally accepted formula $(NH_4)_{10}H_2W_{12}O_{41}.xH_2O$ is first heated or calcined in a multiple hearth furnace to drive off ammonia and water vapor and form a uniformly heated ammonium paratungstate.

By the process described in U.S. Patent 3,175,881, it was believed that ammonium metatungstate which has the formula $(NH_4)_6H_2W_{12}O_{40}.xH_2O$ could be produced by driving off the proper amount of ammonia and water which would be generally from about 5% to about 7%, the variation being due to the varying amounts of waters of hydration in the ammonium paratungstate. Therefore, the temperature and time of heating were designed to achieve weight losses in this range. However, the overall yield of ammonium metatungstate obtained by the process of this patent is only from about 75% to about 85%. It is now believed that the calcining conditions actually resulted in formation of insoluble material which was one of the major causes of the relatively low yield. The insolubles can be (1) heteropoly compounds of tungsten which are tungsten compounds containing arsenic, phosphorus, or silicon, (2) ammonia deficient species as tungsten oxide which result from overcalcining and therefore excessive losses of ammonia, and/or presence of difficulty soluble ammonium paratungstate which results due to insufficient heating in the calcining operation. The latter two types especially can form as a result of uneven heating of the ammonium paratungstate which results in both overcalcining and undercalcining in the same batch. The calcining operation is generally carried out by heating the material in batches in trays or the material is continuously fed through a rotary type of kiln. The preferred method according to U. S. Patent 3,175,881 is in a continuous rotary calciner.

The present invention discloses use of a multiple hearth furnace to uniformly heat the ammonium paratungstate in order to prevent formation of excessive insolubles which result from overheating or underheating. The result is an increase in the overall yield of ammonium metatungstate.

A multiple hearth furnace which can be used in the operation of this invention, is a plate dryer which is a continuously operating contact dryer suitable for handling free-flowing, non-caking, trickling, powdery, or granular products. It consists of a number of drying plates placed one above the other and spaced apart. Its specific characteristics are the mechanical product conveying and the low velocity of purging gases and/or vapors which avoids excessive dust formation and permits the handling of very fine products and those with a wide particle distribution. Plate dryers manufactured by Krauss Maffei are especially suitable. In general, the plate dryer operates by allowing the moist product to trickle from a feed mechanism such as a bucket wheel, onto the top plate. The rotating raking system which consists of rakes positioned on each plate, conveys the drying product in a spiralic pattern through several revolutions to and over the outer rim of the first plate. Here the product trickles to the next plate below, where it is conveyed to the center of the plate in the same manner as before. The transportation operation repeats itself according to the number of plates. During its contact with the heated plate surface, the product is drying. The vapors are exhausted or discharged by purging gases (air or inert gas) flowing transversely across the plates. Each plate can be heated individually thus allowing a temperature profile exactly suited to the product and process. Heating media are steam, hot water, or heat transfer fluids.

Another type of multiple hearth furnace is the Turbo Dryer in particular, one manufactured by Wyssmont, of Fort Lee, New Jersey. The Turbo Dryer has only two moving parts, the tray/shelf assembly and the fan assembly. Wet feed enters the dryer through a feed chute in the roof of the housing and flows onto the first shelf. The shelves are circular with cut out center and radial slots. The shelves are rigidly mounted on an inner supporting frame forming a vertical stack which rotates slowly as a unit. Material flows onto each shelf from the one above, forming a pile. The rotation of the tray/shelf assembly carries the freshly formed pile past a stationary blade set to level the pile to fill the tray at a uniform height. At the end of a revolution, the tray segment meets a second stationary blade set to wipe the tray clean of material. The material is held stationary by the wiper blade while the tray continues its rotation. The material flows through the radial slot on the shelf below where the cycle is repeated. Material progresses downward from shelf to shelf through the dryer and is discharged through a chute in the housing bottom. Air or other drying medium is fed to the dryer through a side mounted vertical manifold with control dampers. Air movement inside the dryer is provided by centrifugal fans mounted on a single vertical shaft. The fan assembly fits in the center of the shelf assembly and rotates independently of the shelves. The drying medium leaves the dryer through a roof exhaust.

While very specific multi hearth furnaces have been just described, it is to be understood that any multiple hearth or stage type of furnace or dryer can be used to accomplish uniform heating of the ammonium paratungstate.

The heating conditions as temperature, residence time, bed depth, number of stages or hearths, can vary depending on the particular furnace or dryer being used. However, in general heating temperatures are from 200°C to 400°C with from 260°C to 370°C being preferred. The material bed depth is maintained generally from 1.27 to 6.35 cm (1/2 inches to 2 1/2 inches) with from 1.91 to 3.81 cm (3/4 inches to 1 1/2 inches) being preferred. The bed of material is gently, and continuously agitated. The flow of heated air through the furnace is closely regulated to from 0.021 to 0.057 m³ (3/4 to 2 cubic feet) of air per 0.45 kg (pound) of ammonium paratungstate. The residence time, of course varies with the above conditions. The heating conditions are designed to give a weight loss of from 5.5% to 7.5%. In this range of weight loss, there are less ammonia deficient species formed and therefore less insolubles.

The heated ammonium paratungstate is then digested in water to form an aqueous ammonium metatungstate solution and some insoluble material. The digestion is carried out by adding the heated ammonium paratungstate to the water in separate portions, the addition of each portion being followed by heating the respective resulting mixture at from 80°C to 100°C, preferably at from 85°C to 95°C for from 5 to 13 h at relatively constant volume, while maintaining the pH of the respective mixture at from 3.5 to 4.5 by adding ammonia or ammonium hydroxide as necessary. The addition of the separate portions of the heated ammonium paratungstate is carried out until the concentration of the aqueous ammonium metatungstate solution reaches about 260 g of WO₃ per l. The initial temperature of the water, preferably deionized water, before any ammonium paratungstate is added to it is preferable from 80°C to 95°C. Typically the heating time increases with the addition of successive portions of the ammonium paratungstate. For example, after the first portion is added, the resulting mixture is heated after the first portion is added, the resulting mixture is heated for 5 h to 7 h; after the second portion is added, the resulting mixture is heated for 7 h to 9 h; after the third portion is added, the resulting mixture is heated for from 9 h to 11 h; and after the fourth portion is added, the resulting mixture is heated for from 11 h to 13 h. This technique of adding successive portions of heated ammonium paratungstate to the digestion mixture allows for greater quantities of material to be converted to ammonium metatungstate more efficiently than if the charge of ammonium paratungstate is added all at once.

It is critical that the material be digested at the proper conditions of time and temperature to allow the conversion to the ammonium metatungstate structure. Generally in this particular process from 5 to 13 h of digestion are required for each portion of ammonium paratungstate charge at temperatures of from 80°C to 100°C for this conversion to take place efficiently. These digestion conditions are not taught in U.S. Patent 3,175,881. For proper conversion, it is also critical that the pH range be maintained at from 3.5 to 4.5. During the digestion process there can be some loss of ammonia, resulting in a drop in pH. Therefore, ammonia or ammonium hydroxide can be added to maintain the pH in the proper range. As a result of the digestion, an aqueous solution of ammonium metatungstate is formed. There can also be some insoluble material present due to impurities, or some tungstic oxide, but this amount is very small.

The solution obtained above is then evaporated to a fraction, preferably about one-third of its original volume to concentrate the ammonium metatungstate. An open kettle is suitable for this purpose.

Any insoluble material is then separated from the concentrated ammonium metatungstate solution by any standard technique such as filtration.

Crystalline ammonium metatungstate can then be recovered from the concentrated solution by any conventional manner such as by evaporation or by spray drying.

Based on the WO₃ content of the starting ammonium paratungstate and the ammonium metatungstate produced, the yield is at least 95%.

To more fully illustrate this invention, the following example is presented. All parts, portions, and percentages are on a weight basis unless otherwise stated.

## Example

400 parts of ammonium paratungstate which was heated in a Wyssmont dryer is digested in 1450 parts of deionized water according to the following procedure. The water is heated to about

90°C. 100 parts of the heated ammonium paratungstate is then added and the resulting mixture is digested for about 6 h at relatively constant volume. 100 parts of the heated ammonium paratungstate is then added to this digestion mixture and the resulting mixture is digested for about 8 h at relatively constant volume. After the 8 h digestion, 100 parts of heated ammonium paratungstate is added to the digestion mixture and the resulting mixture is digested for about 10 h at relatively constant volume. After the 10 h digestion, 100 parts of heated ammonium paratungstate is added to the digestion mixture and the resulting mixture is digested for about 12 h at relatively constant volume. The temperature is maintained at from 85°C to 95°C throughout the digestion process. After the 12 h digestion, the resulting digestion mixture is concentrated. The insolubles are filtered off. About 96% of the $WO_3$ which was in the starting ammonium paratungstate is recovered in solution such as ammonium metatungstate.

## Claims

1. A method of producing crystalline ammonium metatungstate from ammonium paratungstate comprising

   1) heating said ammonium paratungstate at a temperature of from 200°C to 400°C to form a uniformly heated ammonium paratungstate;

   2) digesting said heated ammonium paratungstate in water to form an aqueous ammonium metatungstate solution;

   3) evaporating said solution of ammonium metatungstate to form a concentrated ammonium metatungstate solution;

   4) separating any insoluble material from said concentrated ammonium metatungstate solution; and

   5) crystallizing ammonium metatungstate from said concentrated ammonium metatungstate solution,

   **characterized in that**, said heating is conducted in a multiple hearth furnace with a weight loss of from 5.5 to 7.5%,

   said digesting is conducted by adding said heated ammonium paratungstate to the water in separate portions, the addition of each portion being followed by heating the respective resulting mixture at from 80°C to 100°C for from 5h to 13h at a constant volume while maintaining the pH of the respective resulting mixture at from 3.5 to 4.5 by the addition of ammonia as necessary, the addition of said separate portions of heated ammonium paratungstate being carried out until the concentration of said aqueous ammonium metatungstate solution reaches about 260 g/l $WO_3$ and said evaporating is conducted to a fraction of its original volume.

2. The method of claim 1 wherein said ammonium paratungstate is maintained in said multiple hearth furnace at a depth of from 1.27 to 6.35 cm (0.5 to 2.5 inches).

3. The method of claim 1 wherein at least 95% by weight of tungsten in said ammonium paratungstate is converted to ammonium metatungstate.

## Revendications

1. Procédé de préparation de métatungstate d'ammonium cristallin à partir de paratungstate d'ammonium comprenant:

   1) le chauffage du dit paratungstate d'ammonium à une température comprise entre 200° et 400° C pour former un paratungstate d'ammonium chauffé uniformément;

   2) la digestion du dit paratungstate d'ammonium chauffé dans de l'eau pour former une solution aqueuse de métatungstate d'ammonium;

   3) l'évaporation de la dite solution de métatungstate d'ammonium pour former une solution concentrée de métatungstate d'ammonium;

   4) la séparation de toute matière insoluble de la dite solution concentrée de métatungstate d'ammonium; et

   5) la cristallisation du métatungstate d'ammonium a partir de la solution concentrée de métatungstate d'ammonium,
   caractérisé en ce que

   le dit chauffage est effectué dans un four à foyers multiples avec une perte de poids comprise entre 5,5 et 7,5%.

   la dite digestion est réalisée par addition du paratungstate d'ammonium chauffé à de l'eau en parties séparées, l'addition de chaque partie étant suivie du chauffage du mélange résultant respectif à une température comprise entre 80 et 100° C pendant un temps compris entre 5 et 13 heures à volume constant, tandis que le pH du mélange résultant respectif est maintenu à une valeur comprise entre 3,5 et 4,5 par addition d'ammoniaque si nécessaire, l'addition des dites parties séparées du paratungstate d'ammonium chauffé étant effectuée jusqu'à ce que la concentration de la dite solution aqueuse de métatungstate d'ammonium atteigne environ 260 g/l de $WO_3$, et

la dite évaporation est effectuée pour une partie de son volume original.

2. Procédé selon la revendication 1 dans lequel le dit paratungstate d'ammonium est maintenu dans le dit four à foyers multiples à une profondeur comprise entre 1,27 et 6.35 cm (0.5 et 2,5 pouces).

3. Procédé selon la revendication 1 dans lequel au moins 95 % en poids du tungstène du dit paratungstate d'ammonium est converti en métatungstate d'ammonium

## Patentansprüche

1. Verfahren zur Herstellung von kristallinem Ammoniummetawolframat aus Ammoniumparawolframat, das

1) das Erwärmen des Ammoniumparawolframats bei einer Temperatur von 200°C bis 400°C zur Bildung eines gleichmäßig erwärmten Ammoniumparawolframats;

2) das Aufschließen des erwärmten Ammoniumparawolframats in Wasser zur Bildung einer wäßrigen Ammoniummetawolframat-Lösung;

3) das Verdampfen der Lösung von Ammoniummetawolframat zur Bildung einer konzentrierten Ammoniummetawolframat-Lösung;

4) das Trennen von unlöslichem Material von der konzentrierten Ammoniummetawolframat-Lösung, und

5) das Kristallisieren von Ammoniummetawolframat aus der konzentrierten Ammoniummetawolframat-Lösung umfaßt, **dadurch gekennzeichnet**, daß das Erwärmen in einem mehrherdigen Ofen mit einem Gewichtsverlust von 5,5 bis 7,5 % durchgeführt wird, das Aufschließen durch Zugabe des erwärmten Ammoniumparawolframats zu dem Wasser in getrennten Anteilen durchgeführt wird, wobei die Zugabe jedes Anteils von Erwärmen der entsprechend erhaltenen Mischung bei 80°C bis 100°C über 5 h bis 13 h bei einem konstanten Volumen, während der pH der entsprechend erhaltenen Mischung bei 3,5 bis 4,5 durch Zugabe von Ammoniak, wenn notwendig, gehalten wird, gefolgt wird, wobei die Zugabe der getrennten Anteile von erwärmtem Ammoniumparawolframat solange durchgeführt wird, bis die Konzentration der wäßrigen Ammoniummetawolframat-Lösung etwa 260 g/l $WO_3$ erreicht und das Verdampfen bis zu einer Fraktion ihres ursprünglichen Volumens durchgeführt wird.

2. Verfahren nach Anspruch 1, worin das Ammoniumparawolframat in dem mehrherdigen Ofen in einer Tiefe von 1,27 bis 6,35 cm (0,5 bis 2,5 inch) gehalten wird.

3. Verfahren nach Anspruch 1, worin wenigstens 95 Gew.-% Wolfram in dem Ammoniumparawolframat in Ammoniummetawolframat umgewandelt werden.